# EUROPEAN PATENT APPLICATION

(11) **EP 4 478 228 A1**
(43) Date of publication of application: **18.12.2024**
(21) Application number: 23178589.0
(22) Date of filing: 12.06.2023
(51) Int. Cl.: G06F 21/57, G06F 21/53

(54) **METHOD FOR IMPROVING DATA SECURITY**

(71) Applicant: Nuuday A/S, 2450 Copenhagen SV (DK)
(72) Inventor: RASMUSSEN, Martin Gammelgård, Copenhagen SV (DK); WAEL, Nino Martinez, Copenhagen SV (DK); CHRISTENSEN, Anders, Copenhagen SV (DK)
(74) Representative: Zacco Denmark A/S

(57) **Abstract**

Disclosed is a method for improving data security in an application, the method being performed in a client system, a service provider system and/or a cloud service system, the method comprising: - requesting (320) a quote by a provider agent in the cloud service system, the quote being a cryptographic measurement of an instantiated enclave, - performing remote attestation, wherein the remote attestation comprises: - initiating (350) the remote attestation by the provider agent, to a provider attestation service, in the cloud service system; - verifying (225) the quote against a provider quote verification service (QVS) in the service provider system; and - validating an integrity of the application by verifying (235) a quote enclave signature against a provider attestation data storage in the service provider system, thereby improving data security in the application.

## Description

### FIELD

The present invention relates to a method for improving data security in an application. The method is performed in a client system, a service provider system, and/or a cloud service system. The method comprises performing remote attestation.

### BACKGROUND

Data security for protecting data, such as personal data, is important, and also required by law by the General Data Protection Regulation (GDPR) of the European Union (EU).

Various methods exist today for securing data in software applications, however these methods may not be secure enough to comply with the General Data Protection Regulation (GDPR).

Thus, there is a need for an method for improving data security in an application.

### SUMMARY

Data security means protecting digital data, such as those in databases, from destructive forces and from the unwanted actions of unauthorized users, such as a cyberattack or a data breach.

Software-based security solutions encrypt the data to protect it from theft. However, a malicious program or a hacker could corrupt the data to make it unrecoverable, making the system unusable. Hardware-based security solutions prevent read and write access to data, which provides very strong protection against tampering and unauthorized access.

Since the General Data Protection Regulation (GDPR) of the European Union (EU) became law on May 25, 2018, organizations may face significant penalties of up to €20 million or 4% of their annual revenue if they do not comply with the regulation. It is intended that GDPR will force organizations to understand their data privacy risks and take the appropriate measures to reduce the risk of unauthorized disclosure of consumers' private information.

Disclosed is a method for improving data security in an application. The method is performed in a client system, a service provider system, and/or a cloud service system. The method comprises requesting a quote by a provider agent in the cloud service system, the quote being a cryptographic measurement of an instantiated enclave. The method comprises performing remote attestation. The remote attestation comprises initiating the remote attestation by the provider agent, in the cloud service system, to a provider attestation service. The remote attestation comprises verifying the quote against a provider quote verification service (QVS) in the service provider system. The remote attestation comprises validating an integrity of the application by verifying a quote enclave signature against a provider attestation data storage in the service provider system, thereby improving data security in the application.

The method may be a computer-implemented method. The method may be performed in one or more computers in one or more systems.

The method is for improving data security in an application, thus the method may be for providing data security in an application. The method may be for providing compliance with standards, regulations and other requirements. The method may be for providing or improving data security during development and updates of an application. The method may be for providing or improving data security during use, start-up etc. of an application by an end-user. Thus, after the application is approved to be running, the method may continue to be repeated e.g. from step 320 of requesting a quote by the provider agent in the cloud service system. Then the remote attestation may be performed continuously, such as every time the application is started, e.g. by the end-user, or such as at regular time intervals etc.

The application may be a software application used by a number of users. The application may contain and/or have access to data and information about persons, such as the users of the application. The application may e.g. be a communication platform for schools, daycares etc, such as the Danish application Aula used by all elementary schools in Denmark. Since the application may contain data and information about persons, such as their names, birthdays, photos, health information, other private information, etc, the application must comply with the General Data Protection Regulation (GDPR) for protecting the data in the application.

Development and updates of an application may typically be performed across a number of systems, such as a client system, a service provider system, and a cloud service system.

The present method is performed in a client system, a service provider system, and/or a cloud service system. The client system may e.g. be the system of the client company developing the application.

The service provider system may e.g. be the system of a service provider company, such as a company providing the security of the data, and/or providing the compliance of the application etc. The service provider may e.g. be the Danish company TDC Erhverv, which is a telecommunications and software company.

The cloud service system may be a cloud service provider system, such as a cloud service provider platform, such as a cloud computing platform, such as a container platform, such as a hyperscalar container platform. In computing, hyperscale is the ability of an architecture to scale appropriately as increased demand is added to the system. This typically involves the ability to seamlessly provide and add compute, memory, networking, and storage resources to a given node or set of nodes that make up a larger computing, distributed computing, or grid computing environment. Hyperscale computing may be is necessary in order to build a robust and scalable cloud, big data, map reduce, or distributed storage system and is often associated with the infrastructure required to run large distributed sites such as Google, Facebook, Twitter, Amazon, Microsoft, HUAWEI CLOUD, IBM Cloud or Oracle. Companies like Ericsson, AMD, and Intel provide hyperscale infrastructure kits for IT service providers. Companies like Scaleway, Switch, Alibaba, HUAWEI, IBM, QTS, Digital Realty Trust, Equinix, Oracle, Facebook, Amazon Web Services, SAP, Microsoft and Google build data centers for hyperscale computing. Such companies are sometimes called "hyperscalers."

The method comprises requesting a quote by a provider agent in the cloud service system. The quote is a cryptographic measurement of an instantiated enclave. An enclave is a protected private region of memory in the central processing unit (CPU) and the random-access memory (RAM). The provider agent may be a so-called cloudkey agent from the service provider.

The method comprises performing remote attestation of data. The remote attestation comprises initiating the remote attestation by the provider agent, in the cloud service system, to a provider attestation service. The remote attestation comprises verifying the quote against a provider quote verification service (QVS) in the service provider system. This may also be referred to as a validation of the hardware.

The remote attestation comprises validating an integrity of the application by verifying a quote enclave signature against a provider attestation data storage in the service provider system. This may also be referred to as a validation of the application integrity, and it comprises verifying the signature.

Due to the above steps, the method provides improving data security in the application.

The method relates to services which secures the integrity of a quote verification service (QVS), such as the Intel SGX (Software Guard Extension) technology.

The quote verification service (QVS), such as Intel QVS, is a method for validating the integrity of a secure enclave. The secure enclave may be in the central processing unit (CPU) and the random-access memory (RAM), encrypted with a key, e.g. an Elliptic Curve Digital Signature Algorithm (ECDSA) -encryption. Each enclave is encrypted with a key (MRSIGNER) which results in that each enclave has its own identity (MRENCLAVE). To obtain the best isolation of the enclaves, different keys (MRSIGNER) are used.

As a part of the quote verification service (QVS), a validation of the enclaves is performed through a so-called attestation. The validation can e.g. be performed by that the enclave contacts a Remote Attestation service, which can be administered by a third party, which in the present method is the service provider. This enables the third party to validate the integrity of the area.

In the method, a provider agent is used. The provider agent may be an attestation agent from the service provider. During start-up of the container, a number of actions are performed in a prioritised order.

One of the actions is that a Remote Attestation is performed against the provider attestation service. Here the integrity of the underlying hardware is controlled, which comprises the maintenance level of the CPU and the CPU model.

After this, the signing of the application (MRENCLAVE) is controlled against a data storage administered by the service provider. This ensures that the code which is being executed in the enclave, is the code, which is expected to be executed.

In the method, a provider attestation service is used. The provider attestation service receives a request from the provider agent. The request may comprise the following controls:
- control of the quote verification service (QVS), e.g. an SGX Quote, where, among others, the hardware information is controlled against the QVS, e.g. Intel, integrity database.
- control of the quote verification service (QVS), e.g. SGX Quote, where the signing (MRENCLAVE) is controlled against the provider Attestation service.

The provider Attestation service will hereafter decide whether it is ok to continue the application start up or whether it must be aborted.

In the method, there may be a step where the application is signed. As a part of the preparation of the container for use in a quote verification service (QVS), e.g. Intel SGX, environment, a signing of the application may be carried out. For this, a manifest may be generated, which prove the integrity of the container. The result of the signing (MRENCLAVE) may be sent to a data storage, which is administered by the service provider for later look up. The application may not start/run in a quote verification service (QVS), e.g. SGX protected, environment without that the integrity of the code is verified. This integrity may be handled by the provider attestation agent against the data storage being administered by the service provider.

It is an advantage to combine a quote verification service (QVS), such as Intel QVS, and a provider attestation service, such as a "cloudkey" from a service provider, such as the company TCD Erhverv A/S. The resulting solution provides a complete control of the secured enclave, i.e. CPU and RAM, and the application therein, i.e. the application signing, where it is being controlled by the provider attestation service. If one of the above control points fails, the application will not start and the container will stop.

This is an advantage of the present method, because without the above, in the prior art the quote verification service (QVS), e.g. Intel QVS, and the signing of the code cannot secure the integrity of the complete process, because in principle it would be possible to execute a not-secure application in a secure enclave.

Furthermore, it is an advantage that the provider attestation service, e.g. TDC Cloud Key, provides the external control of software/hardware providers and/or cloud computing platforms, e.g Intel and Microsoft, which ensures that the execution in the secure enclave can be trusted.

A cloud computing platform may e.g. be Microsoft Azure, which is a cloud computing platform run by Microsoft, which offers access, management, and development of applications and services through global data centers. It provides a range of capabilities, including software as a service (SaaS), platform as a service (PaaS), and infrastructure as a service (laaS). Microsoft Azure supports many programming languages, tools, and frameworks, including Microsoft-specific and third-party software and systems.

Thus, because of the three different entities, being the hardware provider, e.g. Intel SGX, the hyperscaler/cloud service, e.g. Microsoft, and the attestation service provider, e.g. TDC Erhverv, an improved data security is provided by the method, because the three different entities are separate instances, and therefore the attestation service provider ensures the data security, when the method is performed across the different entities/systems.

It is an advantage that the method uses three seperate entities to create a secure solution. Because a three-party security requires that three separate entities are required to create a secure solution, where each of the three entities holds a part of the solution.

It is an advantage that data stored in cloud services can be encrypted, so that the client has the key.

It is an advantage to avoid that the cloud providers, or their respective states, can gain access to information stored in cloud services.

It is an advantage that this ensures compliance with General Data Protection Regulation (GDPR).

The quote verification service (QVS) may be, may use and/or may comprise Intel Software Guard Extensions (SGX), which is a set of security-related instruction codes that are built into some Intel central processing units (CPUs). They allow user-level and operating system code to define protected private regions of memory, called enclaves. SGX is designed to be useful for implementing secure remote computation, secure web browsing, and digital rights management (DRM). Other applications include concealment of proprietary algorithms and of encryption keys.

SGX involves encryption by the CPU of a portion of memory (the enclave). Data and code originating in the enclave are decrypted on the fly within the CPU, protecting them from being examined or read by other code, including code running at higher privilege levels such as the operating system and any underlying hypervisors.

The Intel Software Guard Extension (SGX) and AMD Secure Encrypted Virtualization (SEV) processors enables that hardware is available for runtime memory encryption and remote attestation features.

Trusted Computing is a technology where the computer will consistently behave in expected ways, and those behaviours will be enforced by computer hardware and software. Enforcing this behaviour is achieved by loading the hardware with a unique encryption key that is inaccessible to the rest of the system and the owner.

Remote attestation allows changes to the user's computer to be detected by authorized parties. For example, software companies can identify unauthorized changes to software, including users modifying their software to circumvent commercial digital rights restrictions. It works by having the hardware generate a certificate stating what software is currently running. The computer can then present this certificate to a remote party to show that unaltered software is currently executing.

Remote attestation is usually combined with public-key encryption so that the information sent can only be read by the programs that requested the attestation, and not by an eavesdropper.

According to an aspect, disclosed is a method for improving data security in an application. The method is performed in a service provider system. The method comprises performing remote attestation, which comprises verifying a quote against a provider quote verification service (QVS) in the service provider system. The quote being a cryptographic measurement of an instantiated enclave. The remote attestation comprises validating an integrity of the application by verifying a quote enclave signature against a provider attestation data storage in the service provider system, thereby improving data security in the application.

In some embodiments, the method comprises:
- performing a mutual authentication between the service provider system and the cloud service system, wherein the mutual authentication comprises:
   - initiating the remote attestation by the provider agent, to the provider attestation service, in the cloud service system, over a mutual authentication protocol; and
   - checking an integrity of the mutual authentication protocol against the provider attestation data storage, in the service provider system.

The mutual authentication protocol may be mutual transport layer security (mTLS). mTLS ensures that the parties at each end of a network connection are who they claim to be by verifying that they both have the correct private key. The information within their respective TLS certificates provides additional verification. Transport Layer Security (TLS) is an encryption protocol in wide use on the Internet. TLS authenticates the server in a client-server connection and encrypts communications between client and server so that external parties cannot spy on the communications. Public key and private key: TLS works using a technique called public key cryptography, which relies on a pair of keys - a public key and a private key. Anything encrypted with the public key can be decrypted only with the private key. Therefore, a server that decrypts a message that was encrypted with the public key proves that it possesses the private key. Anyone can view the public key by looking at the domain's or server's TLS certificate. TLS certificate: A TLS certificate is a data file that contains important information for verifying a server's or device's identity, including the public key, a statement of who issued the certificate (TLS certificates are issued by a certificate authority), and the certificate's expiration date. TLS handshake: The TLS handshake is the process for verifying the TLS certificate and the server's possession of the private key. The TLS handshake also establishes how encryption will take place once the handshake is finished.

In some embodiments, the method comprises, prior to performing the remote attestation of data:
- creating a standard container for the standard development of the application, in the client system; and
- creating a shielded container and injecting the provider agent in the shielded container, in the client system.

These steps of the method may be the first steps of a development process of the application.

A container may be a lightweight, stand-alone, executable package of software that comprises everything needed to run an application, i.e. code, runtime, system tools, system libraries, settings.

In some embodiments, the method comprises, prior to performing the remote attestation of data:
- providing an enclave signature structure (SIGSTRUCT) comprising a unique enclave identity, in the client system; and
- uploading the enclave signature structure (SIGSTRUCT) to the provider attestation service, in the client system.

These steps may be performed after creating the shielded container.

An enclave signature structure may be called a SIGSTRUCT, and may comprise MRSIGNER and MRENCLAVE amongst others. The MRSIGNER may be the signing identity provided by an authority, which signs the enclave prior to distribution. The MRENCLAVE may comprise of code checksum and MRSIGNER checksum. There may be two identities associated with an enclave. One of them is the Enclave Identity, and may be represented by the value of MRENCLAVE, which may be a cryptographic hash of the enclave log (measurement) as it goes through every step of the build and initialization process. MRENCLAVE uniquely identifies any particular enclave, so using the Enclave Identity will restrict access to the sealed data only to instances of that enclave. Different builds/versions of an enclave will result in a different MRENCLAVE value. Thus, when sealing using the Enclave Identity, sealed data will not be available to different versions of the same enclave, only to identical enclave instantiations.

In some embodiments, the method comprises, prior to performing the remote attestation of data:
- in accordance with a determination , in the provider system, that a source from the client system is trusted:
   - uploading the enclave signature structure (SIGSTRUCT) to the provider attestation service data storage, in the provider system.

These steps may be performed after uploading the enclave signature structure to the provider attestation service.

Furthermore, in some embodiments, the method comprises, prior to performing the remote attestation of data:
- in accordance with a determination , in the provider system, that a source from the client system is not trusted:
   - aborting operation.

Thus, it improves security that if the source from the client system is determined not to be trusted, then the operation will be aborted.

In some embodiments, the method comprises, prior to performing the remote attestation of data:
- uploading a status of the enclave signature structure (SIGSTRUCT) from the provider attestation service, in the client system;
- in accordance with a determination that the uploading of the enclave signature structure (SIGSTRUCT) is succeeded, in the client system:
   - releasing a standard application flow, in the client system;
- creating a secure enclave with a signature, from the shielded container, in the cloud service system.

These steps may be performed after uploading the enclave signature structure to the provider attestation service data storage.

Furthermore, in some embodiments, the method may comprise:
- in accordance with a determination that the uploading of the enclave signature structure (SIGSTRUCT) is not succeeded, in the client system:
   - aborting the operation.

Thus, it improves security that if the uploading of the enclave signature structure (SIGSTRUCT) is not succeeded, then the operation will be aborted.

In some embodiments, the method comprises, subsequent to requesting the quote by the provider agent in the cloud service system:
- generating a native quote, in the cloud service system;
- obtaining the quote, in the cloud service system.

The step of requesting the quote may be after creating the secure enclave.

In some embodiments, the method comprises, subsequent to initiating the remote attestation by the provider agent, verifying the quote against the provider quote verification service (QVS) in the service provider system, based on a determination that the source from the cloud service provider is trusted.

The step of initiating the remote attestation by the provider agent, may be after obtaining the quote.

Furthermore, in some embodiments, the method may comprise, based on a determination that the source from the cloud service provider is not trusted, aborting the operation.

In some embodiments, verifying the quote against the provider quote verification service (QVS) in the service provider system, comprises:
- performing a native quote verification service (nQVS);
wherein performing the native quote verification service (nQVS) comprises:
- checking a certification revocation list (CRL) of the native quote verification service (nQVS); and
- checking a provisioning certification service client (PCS) of the native quote verification service (nQVS).

The native quote verification service (nQVS) may be Intel QVS.

In some embodiments, validating the application integrity by verifying the quote enclave signature against the provider attestation data storage in the service provider system, comprises:
- looking up the quote in the provider attestation data storage , in the service provider system.

In some embodiments, the method comprises:
- in accordance with a determination, in the service provider system, that the verification of the quote enclave signature and the verification of the quote against the provider quote verification service (QVS) are successful:
   - releasing of information by the provider attestation service, in the service provider system;
   - approving, by the provider agent, the application to start in the shielded container, in the cloud service system; and
   - running the application, in the cloud service system.

These steps may be performed after checking the integrity of the mutual authentication protocol against the provider attestation data storage, in the service provider system.

After the application is running, the process may continue to be repeated e.g. from the step of requesting a quote by the provider agent in the cloud service system. Then the remote attestation may be performed continuously, such as every time the application is started, e.g. by the end-user, or such as at regular time intervals etc.

In some embodiments, the method comprises:
- in accordance with a determination , in the service provider system, that the verification of the quote enclave signature and the verification of the quote against the provider quote verification service (QVS) are not successful:
   - providing a security operations center (SOC) take-over, in the service provider system;
   - termination of the shielded container by the provider agent, in the cloud service system; and
   - halting/stopping of the application.

These steps may be performed after checking the integrity of the mutual authentication protocol against the provider attestation data storage, in the service provider system.

According to an aspect, disclosed is a data processing system comprising means for carrying out the method of claim 1. One or more data processing systems may be provided, such as a data processing system for the client system, for the service provider system and for the cloud service system. The means may be one or more processors.

According to an aspect, disclosed is a computer program product comprising instructions which, when the program is executed by a computer, cause the computer to carry out the method of claim 1. One or more computer program products may be provided, such as a computer program product for the client system, for the service provider system and for the cloud service system. One or more computer may be provided, such as a computer for the client system, for the service provider system and for the cloud service system.

According to an aspect, disclosed is a computer-readable storage medium comprising instructions which, when executed by a computer, cause the computer to carry out the method of claim 1. One or more computer-readable storage media may be provided, such as a computer-readable storage medium for the client system, for the service provider system and for the cloud service system.

The present invention relates to different aspects including the method, the data processing system, the computer program product, and the computer-readable storage medium described above and in the following, and corresponding device parts, each yielding one or more of the benefits and advantages described in connection with the first mentioned aspect, and each having one or more embodiments corresponding to the embodiments described in connection with the first mentioned aspect and/or disclosed in the appended claims.

### BRIEF DESCRIPTION OF THE DRAWINGS

The above and other features and advantages will become readily apparent to those skilled in the art by the following detailed description of exemplary embodiments thereof with reference to the attached drawings, in which:
Fig. 1 schematically illustrates an exemplary method for improving data security in an application.
Fig. 2 schematically illustrates a flowchart of an exemplary method for improving data security in an application.
Fig. 3 schematically illustrates an exemplary method for improving data security in an application.
Fig. 4 schematically illustrates an exemplary diagram of a method for improving data security in an application.

### DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

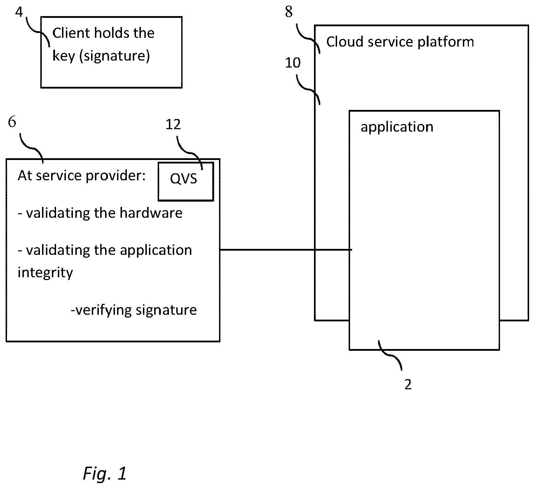

Fig. 1 schematically illustrates an exemplary method for improving data security in an application 2. The method is performed in a service provider system 6. The method comprises performing remote attestation, which may comprise validating a hardware. Validating a hardware may comprise verifying a quote against a provider quote verification service (QVS) 12 in the service provider system 6. The quote being a cryptographic measurement of an instantiated enclave. The remote attestation comprises validating an integrity of the application 2 by verifying a quote enclave signature against a provider attestation data storage in the service provider system 6, thereby improving data security in the application.

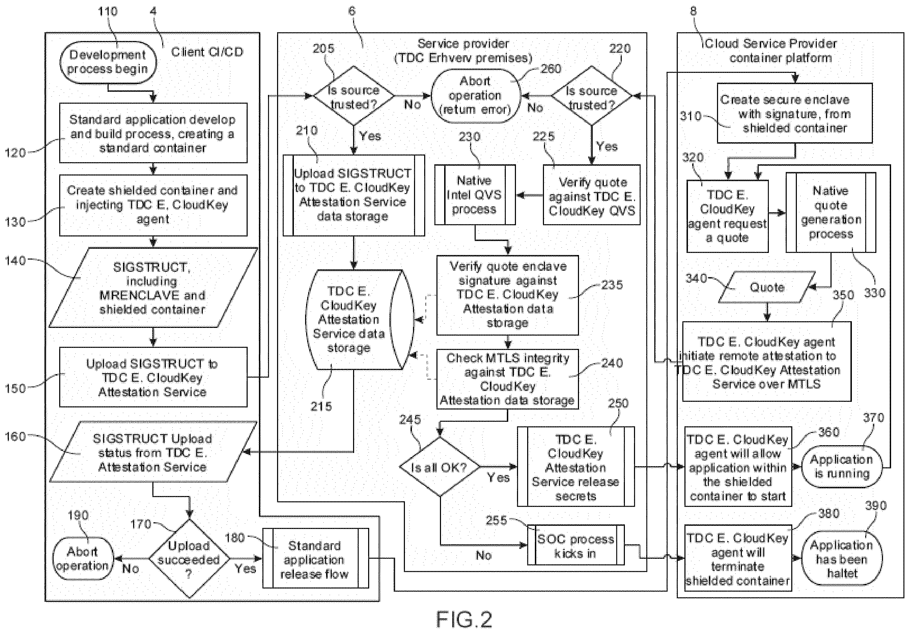

Alternatively and/or additionally, the method is performed in a client system 4, a service provider system 6, and/or a cloud service system 8. The method comprises requesting a quote by a provider agent 10 in the cloud service system 8, the quote being a cryptographic measurement of an instantiated enclave. The method comprises performing remote attestation. The remote attestation comprises initiating the remote attestation by the provider agent 10, to a provider attestation service, in the cloud service system 8. The remote attestation comprises validating the hardware, which comprises verifying the quote against a provider quote verification service (QVS) 12 in the service provider system 6. The remote attestation comprises validating an integrity of the application by verifying a quote enclave signature against a provider attestation data storage in the service provider system 6, thereby improving data security in the application. Fig. 2 schematically illustrates a flowchart of an exemplary method for improving data security in an application. The method is performed in a client system 4, a service provider system 6, and/or a cloud service system 8. The method comprises requesting (320) a quote by a provider agent in the cloud service system 8, the quote being a cryptographic measurement of an instantiated enclave. The method comprises performing remote attestation. The remote attestation comprises initiating (350) the remote attestation by the provider agent, to a provider attestation service, in the cloud service system 8. The remote attestation comprises verifying (225) the quote against a provider quote verification service (QVS) in the service provider system 6. The remote attestation comprises validating an integrity of the application by verifying (235) a quote enclave signature against a provider attestation data storage in the service provider system 6, thereby improving data security in the application. Prior to the above steps, the method may comprise:
- creating (120) a standard container for the standard development of the application, in the client system; and
- creating (130) a shielded container and injecting the provider agent in the shielded container, in the client system.

These steps of the method may be the first steps of a development process of the application.

The method may then comprise:
- providing (140) an enclave signature structure (SIGSTRUCT) comprising a unique enclave identity, in the client system; and
- uploading (150) the enclave signature structure (SIGSTRUCT) to the provider attestation service, in the client system.

The method may then comprise:
- in accordance with a determination (205), in the provider system, that a source from the client system is trusted:
   - uploading (210) the enclave signature structure (SIGSTRUCT) to the provider attestation service data storage, in the provider system.

Additionally and/or alternatively, the method may comprise:
- in accordance with a determination (205), in the provider system, that a source from the client system is not trusted:
   - aborting (260) operation.

The method may then comprise:
- uploading (160) a status of the enclave signature structure (SIGSTRUCT) from the provider attestation service, in the client system;
- in accordance with a determination (170) that the uploading of the enclave signature structure (SIGSTRUCT) is succeeded, in the client system:
   - releasing (180) a standard application flow, in the client system;
- creating (310) a secure enclave with a signature, from the shielded container, in the cloud service system.

Additionally and/or alternatively, the method may comprise:
- in accordance with a determination (170) that the uploading of the enclave signature structure (SIGSTRUCT) is not succeeded, in the client system:
   - aborting (190) the operation.

The method may then comprise, subsequent to requesting (320) the quote by the provider agent in the cloud service system:
- generating (330) a native quote, in the cloud service system;
- obtaining (340) the quote, in the cloud service system.

Thus, the step of requesting (320) the quote may be after creating (310) the secure enclave.

The method may then comprise, subsequent to initiating (350) the remote attestation by the provider agent, verifying (225) the quote against the provider quote verification service (QVS) in the service provider system, based on a determination (220) that the source from the cloud service provider is trusted.

The step of initiating (350) the remote attestation by the provider agent, may be after obtaining (340) the quote.

Additionally and/or alternatively, the method may comprise, based on a determination (220) that the source from the cloud service provider is not trusted, aborting (260) the operation.

Furthermore, the step of verifying (225) the quote against the provider quote verification service (QVS) in the service provider system, may comprise:
- performing (230) a native quote verification service (nQVS).

Performing the native quote verification service (nQVS) may comprise:
- checking a certification revocation list (CRL) of the native quote verification service (nQVS); and
- checking a provisioning certification service client (PCS) of the native quote verification service (nQVS).

Furthermore, the step of validating the application integrity by verifying (235) the quote enclave signature against the provider attestation data storage in the service provider system, may comprise:
- looking up the quote in the provider attestation data storage (215), in the service provider system.

The method may comprise:
- performing a mutual authentication between the service provider system and the cloud service system, wherein the mutual authentication comprises:
   - initiating (350) the remote attestation by the provider agent, to the provider attestation service, in the cloud service system, over a mutual authentication protocol; and
   - checking (240) an integrity of the mutual authentication protocol against the provider attestation data storage, in the service provider system.

After the step of checking (240) the integrity of the mutual authentication protocol against the provider attestation data storage, in the service provider system, the method may continue to comprise:
- in accordance with a determination (245), in the service provider system, that the verification (235) of the quote enclave signature and the verification (225) of the quote against the provider quote verification service (QVS) are successful:
   - releasing (250) of information by the provider attestation service, in the service provider system;
   - approving (360), by the provider agent, the application to start in the shielded container, in the cloud service system; and
   - running (370) the application, in the cloud service system.

After the application is running at step 370, the process may continue to be repeated e.g. from step 320 of requesting a quote by the provider agent in the cloud service system. Then the remote attestation may be performed continuously, such as every time the application is started, e.g. by the end-user, or such as at regular time intervals etc.

Alternatively and/or additionally, after the step of checking (240) the integrity of the mutual authentication protocol against the provider attestation data storage, in the service provider system, the method may continue to comprise:
- in accordance with a determination (245), in the service provider system, that the verification (235) of the quote enclave signature and the verification (225) of the quote against the provider quote verification service (QVS) are not successful:
   - providing (255) a security operations center (SOC) take-over, in the service provider system;
   - termination (380) of the shielded container by the provider agent, in the cloud service system; and
   - halting/stopping (390) of the application.

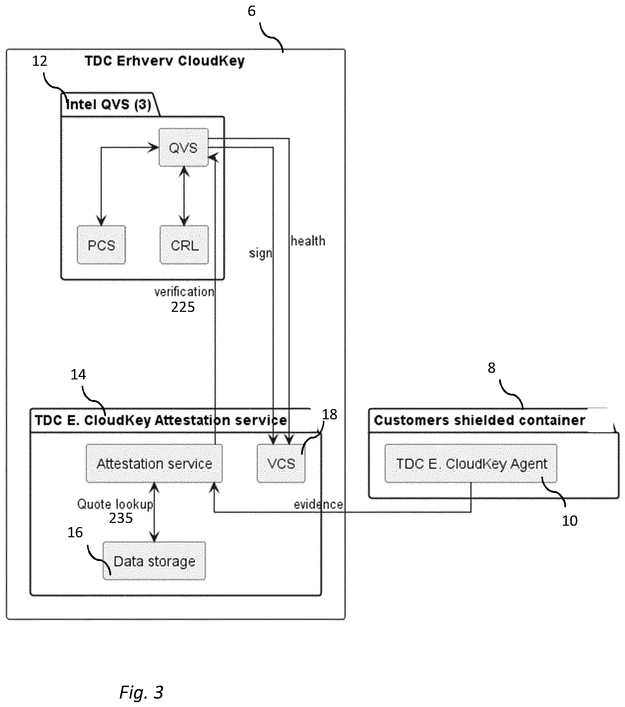

Fig. 3 schematically illustrates an exemplary method for improving data security in an application. The method is performed in a client system, a service provider system 6, and/or a cloud service system 8. The method comprises requesting a quote by a provider agent 10 in the cloud service system 8, the quote being a cryptographic measurement of an instantiated enclave. The method comprises performing remote attestation. The remote attestation comprises initiating the remote attestation by the provider agent 10, in the cloud service system 8, to a provider attestation service 14 in the service provider system 6. The remote attestation comprises verifying (225) the quote against a provider quote verification service (QVS) 12 in the service provider system 6. The remote attestation comprises validating an integrity of the application by verifying (235) a quote enclave signature against a provider attestation data storage 16 in the service provider system 6, thereby improving data security in the application. Validating the application integrity may be performed by verifying (235) the quote enclave signature against the provider attestation data storage 16 in the service provider system 6, which may comprises looking up the quote in the provider attestation data storage 16, in the service provider system 6.

Furthermore, the step of verifying (225) the quote against the provider quote verification service (QVS) 12 in the service provider system 6, comprises:
- performing a native quote verification service (nQVS).

Performing the native quote verification service (nQVS) may comprise:
- checking a certification revocation list (CRL) of the native quote verification service (nQVS); and
- checking a provisioning certification service client (PCS) of the native quote verification service (nQVS).

Furthermore, the QVS 12 may return to a verification crypto service (VCS) 18 in the provider attestation service 14 with "sign" and "health". The VCS 18 comprises evidence which comprises the quote and other evidence.

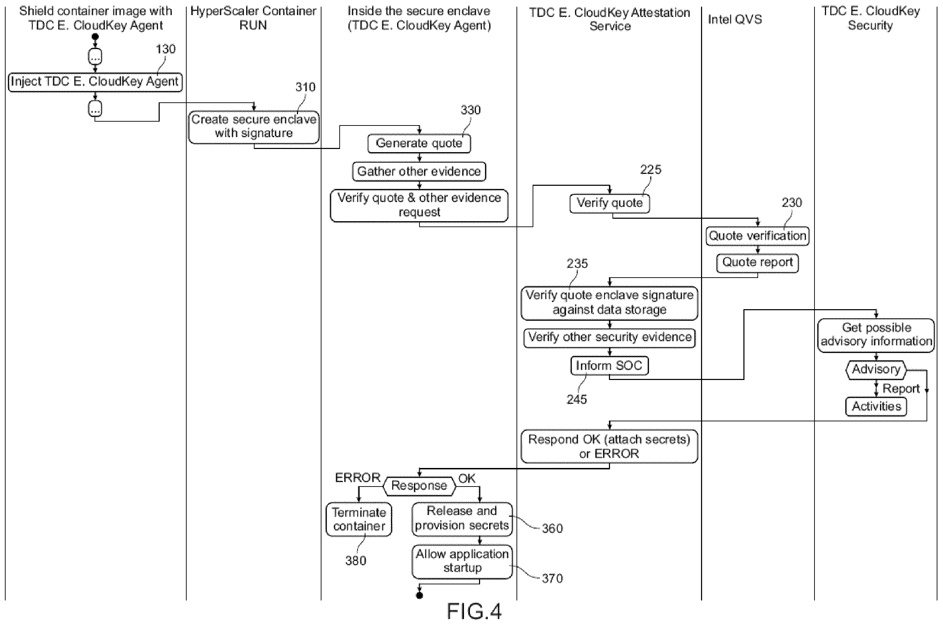

Fig. 4 schematically illustrates an exemplary diagram of a method for improving data security in an application. The method is performed in a client system, a service provider system, and/or a cloud service system. The method comprises requesting a quote by a provider agent in the cloud service system, the quote being a cryptographic measurement of an instantiated enclave. The method comprises performing remote attestation. The remote attestation comprises initiating the remote attestation by the provider agent, in the cloud service system, to a provider attestation service in the service provider system. The remote attestation comprises verifying the quote against a provider quote verification service (QVS) in the service provider system. The remote attestation comprises validating an integrity of the application by verifying a quote enclave signature against a provider attestation data storage in the service provider system, thereby improving data security in the application.

The steps of the method corresponds to one or more of the steps of the flowchart in fig. 2, such as steps 130, 310, 330, 225, 230, 235, 245, 360, 370 and 380.

The first column is "shield container image with TDC E. Cloudkey agent", which may be at the client system, where TDC E. Cloudkey agent may be the provider agent. The second column is the "HyperScaler Container RUN", which may be at the cloud service system. The third column is "Inside the secure enclave (TDC E. Cloudkey agent)", which may be at the cloud service system. The fourth column is "TDC E. Cloudkey attestation service", which may be at the service provider system. The fifth column is "Intel QVS", which may be at the service provider system. The sixth column is "TDC E. Cloudkey security" which may be at the service provider system.

Although particular features have been shown and described, it will be understood that they are not intended to limit the claimed invention, and it will be made obvious to those skilled in the art that various changes and modifications may be made without departing from the scope of the claimed invention. The specification and drawings are, accordingly to be regarded in an illustrative rather than restrictive sense. The claimed invention is intended to cover all alternatives, modifications and equivalents.

### LIST OF REFERENCES

2 application
4 client system
6 service provider system
8 cloud service system
10 provider agent
12 quote verification service (QVS)
14 provider attestation service
16 provider attestation data storage
18 verification crypto service (VCS)

110 method step performed in client system
120 method step performed in client system
130 method step performed in client system
140 method step performed in client system
150 method step performed in client system
160 method step performed in client system
170 method step performed in client system
180 method step performed in client system
190 method step performed in client system

205 method step performed in service provider system
210 method step performed in service provider system
215 method step performed in service provider system
220 method step performed in service provider system
225 method step performed in service provider system
230 method step performed in service provider system
235 method step performed in service provider system
240 method step performed in service provider system
245 method step performed in service provider system
250 method step performed in service provider system
255 method step performed in service provider system
260 method step performed in service provider system
310 method step performed in cloud service system
320 method step performed in cloud service system
330 method step performed in cloud service system
340 method step performed in cloud service system
350 method step performed in cloud service system
360 method step performed in cloud service system
370 method step performed in cloud service system
380 method step performed in cloud service system
390 method step performed in cloud service system

## Claims

1. A method for improving data security in an application, the method being performed in a client system, a service provider system and/or a cloud service system, the method comprising:
- requesting (320) a quote by a provider agent in the cloud service system, the quote being a cryptographic measurement of an instantiated enclave,
- performing remote attestation, wherein the remote attestation comprises:
- initiating (350) the remote attestation by the provider agent, in the cloud service system, to a provider attestation service;
- verifying (225) the quote against a provider quote verification service (QVS) in the service provider system; and
- validating an integrity of the application by verifying (235) a quote enclave signature against a provider attestation data storage in the service provider system, thereby improving data security in the application.

2. The method according to any of the preceding claims, wherein the method comprises:
- performing a mutual authentication between the service provider system and the cloud service system, wherein the mutual authentication comprises:
- initiating (350) the remote attestation by the provider agent, to the provider attestation service, in the cloud service system, over a mutual authentication protocol; and
- checking (240) an integrity of the mutual authentication protocol against the provider attestation data storage, in the service provider system.

3. The method according to any of the preceding claims, wherein the method comprises, prior to performing the remote attestation of data:
- creating (120) a standard container for the standard development of the application, in the client system; and
- creating (130) a shielded container and injecting the provider agent in the shielded container, in the client system.

4. The method according to any of the preceding claims, wherein the method comprises, prior to performing the remote attestation of data:
- providing (140) an enclave signature structure comprising a unique enclave identity, in the client system; and
- uploading (150) the enclave signature structure to the provider attestation service, in the client system.

5. The method according to any of the preceding claims, wherein the method comprises, prior to performing the remote attestation of data:
- in accordance with a determination (205), in the provider system, that a source from the client system is trusted:
- uploading (210) the enclave signature structure to the provider attestation service data storage, in the provider system.

6. The method according to any of the preceding claims, wherein the method comprises, prior to performing the remote attestation of data:
- uploading (160) a status of the enclave signature structure from the provider attestation service, in the client system;
- in accordance with a determination (170) that the uploading of the enclave signature structure is succeeded, in the client system:
- releasing (180) a standard application flow, in the client system;
- creating (310) a secure enclave with a signature, from the shielded container, in the cloud service system.

7. The method according to any of the preceding claims, wherein the method comprises, subsequent to requesting (320) the quote by the provider agent in the cloud service system:
- generating (330) a native quote, in the cloud service system;
- obtaining (340) the quote, in the cloud service system.

8. The method according to any of the preceding claims, wherein the method comprises, subsequent to initiating (350) the remote attestation by the provider agent, verifying (225) the quote against the provider quote verification service (QVS) in the service provider system, based on a determination (220) that the source from the cloud service provider is trusted.

9. The method according to any of the preceding claims, wherein verifying (225) the quote against the provider quote verification service (QVS) in the service provider system, comprises:
- performing (230) a native quote verification service (nQVS);
wherein performing the native quote verification service (nQVS) comprises:
- checking a certification revocation list (CRL) of the native quote verification service (nQVS); and
- checking a provisioning certification service client (PCS) of the native quote verification service (nQVS).

10. The method according to any of the preceding claims, wherein validating the application integrity by verifying (235) the quote enclave signature against the provider attestation data storage in the service provider system, comprises:
- looking up the quote in the provider attestation data storage (215), in the service provider system.

11. The method according to any of the preceding claims, wherein the method comprises:
- in accordance with a determination (245), in the service provider system, that the verification (235) of the quote enclave signature and the verification (225) of the quote against the provider quote verification service (QVS) are successful:
- releasing (250) of information by the provider attestation service, in the service provider system;
- approving (360), by the provider agent, the application to start in the shielded container, in the cloud service system; and
- running (370) the application, in the cloud service system.

12. The method according to any of the preceding claims, wherein the method comprises:
- in accordance with a determination (245), in the service provider system, that the verification (235) of the quote enclave signature and the verification (225) of the quote against the provider quote verification service (QVS) are not successful:
- providing (255) a security operations center (SOC) take-over, in the service provider system;
- termination (380) of the shielded container by the provider agent, in the cloud service system; and
- halting/stopping (390) of the application.

13. A data processing system comprising means for carrying out the method of claim 1.

14. A computer program product comprising instructions which, when the program is executed by a computer, cause the computer to carry out the method of claim 1.

15. A computer-readable storage medium comprising instructions which, when executed by a computer, cause the computer to carry out the method of claim 1.
